# EUROPEAN PATENT APPLICATION

(11) **EP 2 077 225 A1**
(43) Date of publication of application: **08.07.2009**
(21) Application number: 08150006.8
(22) Date of filing: 02.01.2008
(51) Int. Cl.: B62M 3/08

(54) **Folding pedal**

(71) Applicant: VP Components Co, Ltd., Taichung Hsien Taiwan (CN)
(72) Inventor: Lin, Wen-Hwa, Taichung Hsien (TW)
(74) Representative: Viering, Jentschura & Partner

(57) **Abstract**

A folding pedal is disclosed to include a pedal body (10), which has a center spindle (11) pivotally connectable to a crank of a bicycle, and two pedal blocks (20,21) that are respectively pivotally coupled to top and bottom sides of the pedal body (10) and turnable relative to each other between a first position when the two pedal blocks (20,21) are closed together and extending in same extending direction of the center spindle (11) and a second position where the two pedal blocks (20,21) are opened and respectively extending in direction perpendicular to the center spindle (11).

## Description

### BACKGROUND OF THE INVENTION

### 1. Field of the Invention

The present invention relates to a pedal for bicycle and more particularly, to a folding pedal, which has two pedal blocks that can be turned relative to each other between the operative position for pedaling and the non-operative position for storage.

### 2. Description of the Related Art

A bicycle is a transportation vehicle commonly used in our daily life. In order to save storage space and for easy carrying, various folding collapsible bicycles have been developed and have appeared on the market. A folding bicycle allows folding of the bicycle frame at various joints to reduce the dimensions.

Further, a bicycle has two pedals respectively coupled to the cranks at two sides of the bottom bearing bracket for pedaling by the user to rotate the wheels. However, because the two pedals protrude from the two sides of the bicycle frame, the pedals may interfere with the folding or storage of the folding bicycle. In order to eliminate this problem, collapsible pedals are developed.

A conventional collapsible pedal is known comprising a main pedal body and an auxiliary pedal body. The main pedal body has a sliding track. The auxiliary pedal body is coupled to the main pedal body and movable along the sliding track between a received position and an extended position. This design of collapsible pedal is somewhat functional, however it is still not satisfactory in function. The main drawback of this design of collapsible pedal is its low structural strength. When pedaling the folding pedal heavily, the connection between the main pedal body and the auxiliary pedal body may vibrate and may be damaged easily.

Therefore, it is desirable to provide a folding pedal that eliminates the aforesaid problems.

### SUMMARY OF THE INVENTION

The present invention has been accomplished under the circumstances in view. It is the main object of the present invention to provide a folding pedal for bicycle, which has two pedal blocks that can be turned relative to each other between the operative position for pedaling and the non-operative position for storage. It is another object of the present invention to provide a folding pedal, which has a strong strength. To achieve these and other objects of the present invention, the folding pedal comprises a pedal body, and two pedal blocks. The pedal body has a center spindle pivotally connectable to a crank of a bicycle. The two pedal blocks are respectively pivotally coupled to top and bottom sides of the pedal body and turnable relative to each other between a first position where the two pedals are closed together and extending in same extending direction of the center spindle and a second position where the two pedals are opened and respectively extending in direction perpendicular to the center spindle.

### BRIEF DESCRIPTION OF THE DRAWING

FIG. 1 is an exploded view of a folding pedal according to the present invention.
FIG. 2 is an elevational assembly view showing the operative condition of the folding pedal according to the present invention.
FIG. 3 is an elevational view showing the non-operative condition of the folding pedal according to the present invention.
FIG. 4 is a schematic drawing showing the action of the synchronous positioning mechanism according to the present invention (I).
Fig. 5 is a schematic drawing showing the action of the first pedal block according to the present invention (I).
FIG. 6 is a schematic drawing showing the action of the first pedal block according to the present invention (II).
FIG. 7 is a schematic drawing showing the action of the second pedal block according to the present invention (I).
FIG. 8 is a schematic drawing showing the action of the second pedal block according to the present invention (II).

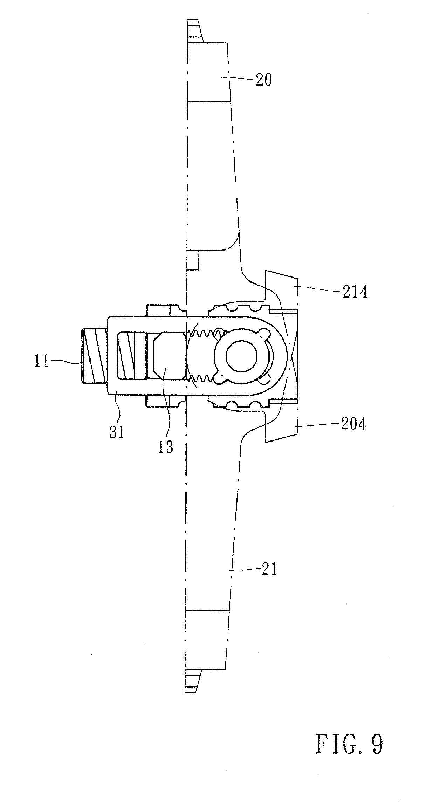

FIG. 9 is a schematic drawing showing the action of the synchronous positioning mechanism according to the present invention (II).

### DETAILED DESCRIPTION OF THE INVENTION

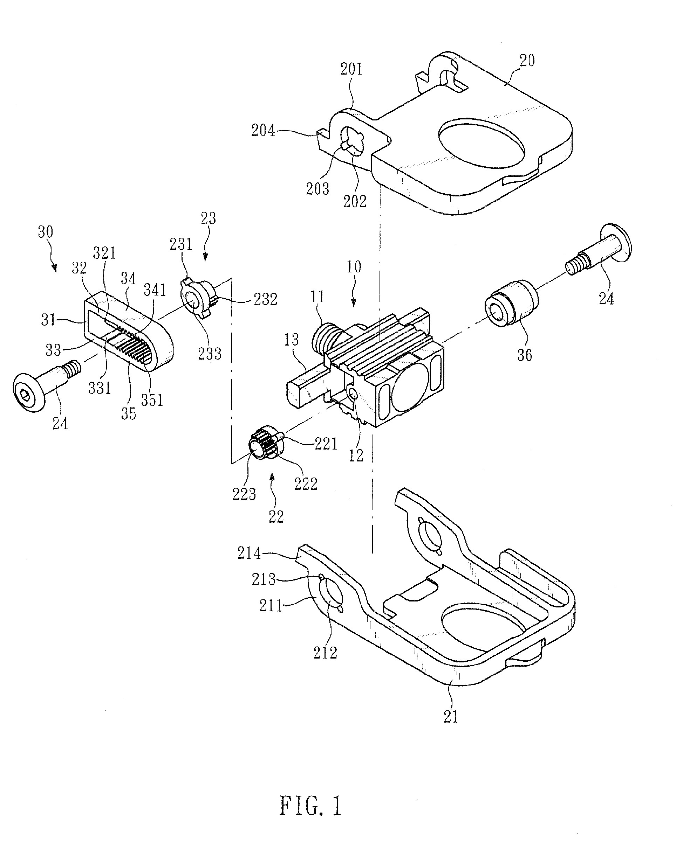

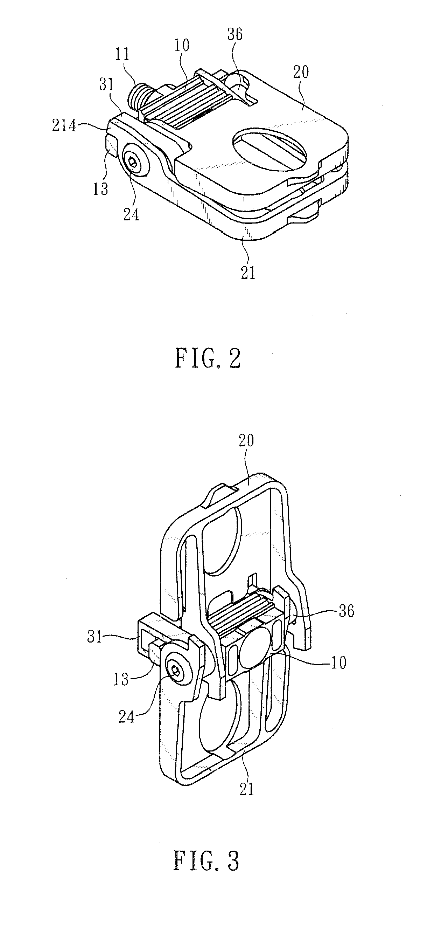

Referring to FIGS. 1 and 2, a folding pedal in accordance with the present invention is shown comprised of a body **10**, a first pedal block **20**, a second pedal block **21**, and a synchronous positioning mechanism **30**.

The body **10** is a rectangular block having a center spindle **11** pivotally connectable to a bicycle's crank (not shown), two axle holes **12** transversely disposed at two opposite lateral sides thereof and extending in direction perpendicular to the center spindle **11**, and two stop bars **13** respectively disposed at the two opposite lateral sides in front of the axle holes **12**.

The first pedal block **20** and the second pedal block **21** are respectively coupled to the body **10** and arranged at different elevations, each having two side lugs **201** or **211**. Each side lug **201** or **211** has a round hole **202** or **212**, at least one, for example, two locating notches **203** or **213** disposed at two opposite sides in communication with the round hole **202** or **212**, and a front butt **204** or **214** forwardly protruding from the periphery.

Two synchronous gears **22** and **23** are respectively mounted in the round hole **202** of one side lug **201** of the first pedal block **20** and the round hole **212** of one side lug **211** of the second pedal block **21** at one side of the body **10** and set in reversed directions, each having two locating ribs **221** or **231** for engaging the locating notches **203** and **213** of the associating side lugs **201** and **211** of the pedal blocks **20** and **21**, a plurality of teeth **222** or **232** extending around the periphery within a predetermined angle, and an axial center through hole **223** or **233**.

Two pivot bolts **24** are respectively fastened to the axle holes **12** of the body **10** to pivotally secure the pedal blocks **20** and **21** to the body **10**, allowing the pedal blocks **20** and **21** to be turned relative to each other. Further, the front butts **204** and **214** of the side lugs **201** and **211** are adapted to act against the stop blocks **13** of the body **10** to limit the turning angle of the pedal blocks **20** and **21** relative to the body **10** to a predetermined range. Further, one pivot bolt **24** is inserted through the axial center through holes **223** and **233** of the synchronous gears **22** and **23** and then fastened to one axle hole **12** of the body **10**.

The synchronous positioning device **30** comprised of an actuating frame **31** is provided at one lateral side of the body **10**. The actuating frame 31 is a hollow open frame having a top rack **34** and a top sliding way **32** longitudinally connected in line and arranged on the top side of the inner diameter thereof, and a bottom rack **35** and a bottom sliding way **33** longitudinally connected in a line and arranged on the bottom side of the inner diameter corresponding to the top rack **34** and the top sliding way **32**. The top rack **34** is comprised of a toothed bar **341**. The bottom rack **35** is formed of a toothed bar **351**. The top sliding way **32** and the bottom sliding way **33** are respectively attached to one stop bar **13** of the body **10**. The toothed bars **341** and **351** are respectively meshed with the teeth **222** and **232** of the synchronous gears **22** and **23**. Therefore, the actuating frame **31** can be moved relative to the associating stop bar **13** of the body, causing the two synchronous gears **22** and **23** to rotate synchronously. Further, the actuating frame **31** has a first protruding rib **321** transversely disposed between the top sliding way **32** and the top rack **34**, and a second protruding rib **331** transversely disposed between the bottom sliding way **33** and the bottom rack **35**. Further, a bearing bushing **36** is mounted in between one side lug **201** of the first pedal block **20** and one side lug **211** of the second pedal block **21** at one side of the body **10** opposite to the actuating frame **31**, having two ends respectively coupled to one round hole **202** of the first pedal block **20** and one round hole **212** of the second pedal block **21**.

Referring to FIGS. 2 and 3, the first pedal block **20** and the second pedal block **21** are pivotally coupled to the pivot bolts **24** that are fastened to the axle holes **12** of the body **10** and extending in direction perpendicular to the spindle **11.** The two pedal blocks **20** and **21** can be turned relative to each other between a first position, namely, the operative position as shown in FIG. **2** where the two pedal blocks **20** and **21** are attached together for enabling the spindle **11** to be coupled to the crank of a bicycle so that the user can pedal the pedal to rotate the crank, and a second position, namely, the non-operative position as shown in FIG. **3**, where the two pedal blocks **20** and **21** are extended out convenient for storage.

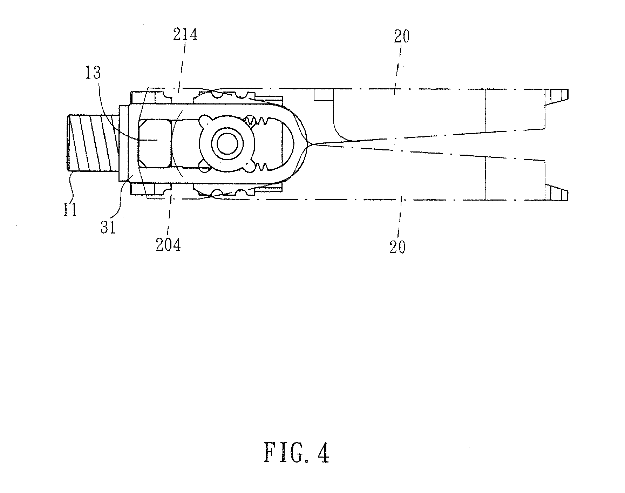

Referring to FIG. **4**, the sliding ways **32** and **33** of the actuating frame **31** are attached to one stop bar **13** of the body **10**, therefore the actuating frame **31** is movable forwards/backwards relative to the associating stop bar **13** of the body **10.** The racks **34** and **35** of the actuating frame **31** are respectively meshed with the synchronous gears **22** and **23** in the pedal blocks **20** and **21**. The two synchronous gears **22** and **23** are set in reversed directions.

The thickness of the teeth **222** and **232** of the synchronous gears **22** and **23** is about one half of the thickness of the teeth of the racks **34** and **25**.

The teeth **222** or **232** are arranged around a part of the periphery of the gear **22** or **23**, Further, the toothed bars **341** and **351** of the actuating frame **31** are respectively meshed with the teeth **222** and **232** of the gears **22** and **23** that are respectively set in the pedal blocks **20** and **21**.

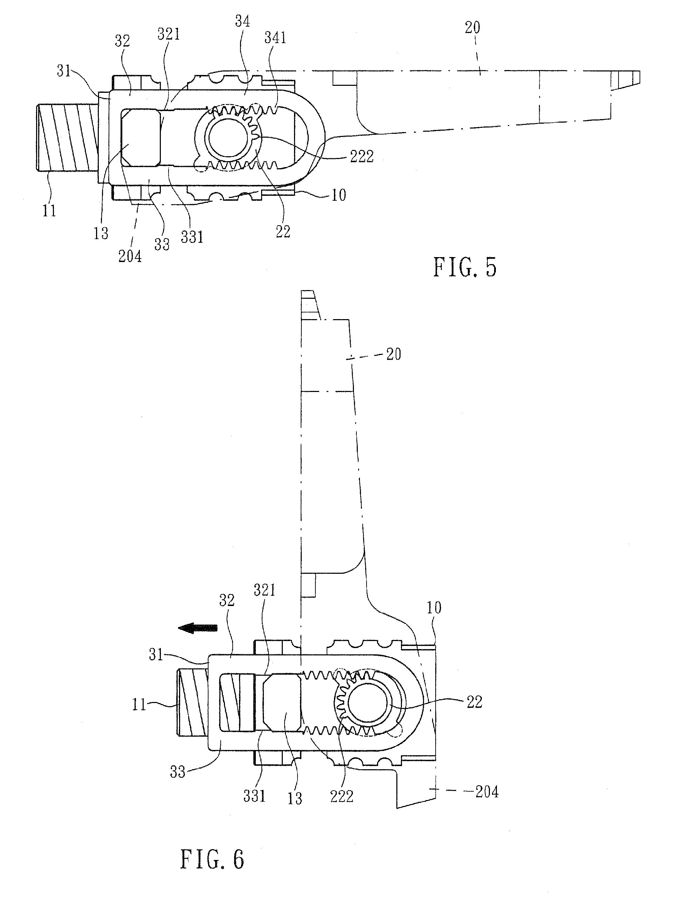

Referring to FIG. 5, the teeth **222** of the synchronous gear **22** are meshed with the toothed bar **341** of the actuating frame **31**. Referring to FIG. 6, when the user turn the first pedal block **20** upwards from horizontal to vertical relative to the body **10**, the associating synchronous gear **22** is rotated with the first pedal block **20**. Because the teeth **222** are meshed with the toothed bar **341**, turning the first pedal block **20** from horizontal to vertical relative to the body **10** causes the actuating frame **31** to be moved forward relative to the body **10** (see the direction of the arrowhead sign).

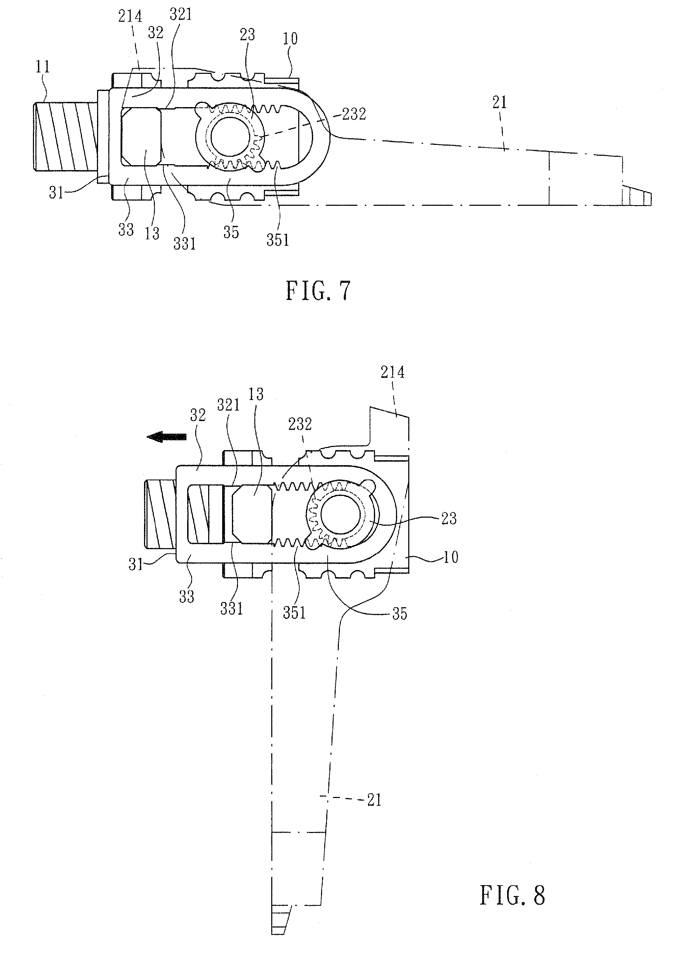

Referring to FIG. 7, the teeth **232** of the synchronous gear **23** are meshed with the toothed bar **351** of the actuating frame **31.** Referring to FIG. 8, when the user turn the second pedal block **30** downwards from horizontal to vertical relative to the body **10**, the associating synchronous gear **23** is rotated with the second pedal block **21**. Because the teeth **232** are meshed with the toothed bar **351**, turning the second pedal block **20** from horizontal to vertical relative to the body **10** causes the actuating frame **31** to move forward relative to the body **10** (see the direction of the arrowhead sign).

Therefore, when the user turns the first pedal block **20** (or the second pedal block **21**) apart from the second pedal block **21** (or the first pedal block **20)**, the associating synchronous gear **22** (or **23**) is rotated to move the actuating frame **31**, causing synchronous rotation of the other synchronous gear **23** (or **22**), and therefore the two pedal blocks **20** and **21** are synchronously turned in reversed directions from the received operative position to the extended non-operative position.

On the contrary, when the user turn the first pedal block **20** (or the second pedal block **21)** from vertical to horizontal, the actuating frame **31** is driven to move turn the second pedal block **21** (or the first pedal block **20**), and therefore the two pedal blocks **20** and **21** are synchronously moved toward each other.

By means of the engagement between the toothed bars **341** and **351** and the teeth **222** and **232** of the synchronous gears **22** and **23**, the actuating frame **31** is movable relative to the associating stop bar **13** to move the two pedal blocks **20** and 21 synchronously relative to each other.

Further, the actuating frame **31** can be molded from plastics or fiber-reinforced material, or made of a resilient metal so that the actuating frame **31** is slightly deformable. Further, as stated above, the actuating frame **31** has a first protruding rib **321** transversely disposed between the top sliding way **32** and the top rack **34**, and a second protruding rib **331** transversely disposed between the bottom sliding way **33** and the bottom rack **35**. When the pedal blocks **20** and **21** are kept in horizontal or vertical, the protruding ribs **321** and **331** are respectively stopped at the associating stop bar **13** at one side to hold the pedal blocks **20** and **21** in position. When the user turning the pedal blocks **20** and **21**, the actuating frame **31** is stretched to expand and to move the protruding ribs **321** and **331** over the associating stop bar **13**. After the pedals **20** and **21** have been turned to the horizontal or vertical position, the actuating frame **31** immediately returns to the former shape to force the protruding ribs **321** and **331** into engagement with the associating stop bar **13** again.

Further, the butts **204** and **214** of the pedal blocks **20** and **21** are adapted to act against the stop bars **13**, limiting the rotary motion of the pedal blocks **20** and **21** relative to the body **10** to a predetermined angle. When the two pedal blocks **20** and **21** are attached together for pedaling by the user, the pressure from the user's leg forces the butts **204** and **214** against the associating stop bars **13.** The higher the pedaling force from the user is the greater the reactive force from the butts **204** and **214** will be. Therefore, the pedal blocks **20** and **21** have sufficient strength to bear pressure when the user pedals the pedal.

The folding pedal can be alternatively set for mounting on the left side or right side of a bicycle. Simply by changing the mounting position of the actuating frame **31**, the synchronous gears **22** and **23** and the bearing bushing **36**, the folding pedal is selectively set for left-side mounting or right-side mounting.

A prototype of folding pedal has been constructed with the features of FIGS.1∼9. The folding pedal functions smoothly to provide all of the features discussed earlier.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A folding pedal comprising:
a pedal body, said pedal body having a center spindle pivotally connectable to a crank of a bicycle; and
two pedal blocks respectively pivotally coupled to top and bottom sides of said pedal body and turnable relative to each other between a first position where said two pedals are closed together and extending in a same extending direction of said center spindle and a second position where said two pedals are opened and respectively extending in a direction perpendicular to said center spindle;

2. The folding pedal as claimed in claim 1, wherein said two pedals each have two parallel side lugs respectively pivotally coupled to two opposite lateral sides of said pedal body.

3. The folding pedal as claimed in claim 2, wherein said pedal body has two pivot holes disposed at two sides; the side lugs of said pedal blocks are respectively pivotally connected to the axle holes of said pedal body with two pivot bolts.

4. The folding pedal as claimed in claim 3, further comprising a synchronous positioning device for causing said two pedals to move relative to each other synchronously, said synchronous positioning device comprising a first synchronous gear and a second synchronous gear respectively mounted in said two pedals, and an actuating frame, said actuating frame having a top rack and a bottom rack respectively meshed with said first synchronous gear and said second synchronous gear for causing said first synchronous gear and said second synchronous gear to rotate in reversed directions to turn said two pedals synchronously.

5. The folding pedal as claimed in claim 4, wherein said actuating frame is molded from plastics.

6. The folding pedal as claimed in claim 4, wherein said actuating frame is molded from a fiber-reinforced material.

7. The folding pedal as claimed in claim 4, wherein said actuating frame is made of a metal material.

8. The folding pedal as claimed in claim 4, wherein the thickness of the teeth of said first and second synchronous gears is about one half of the thickness of the teeth of said top and bottom racks.

9. The folding pedal as claimed in claim 4, wherein said pedal body two stop bars symmetrically disposed at two sides; said actuating frame is movably coupled to one stop bar of said pedal body.

10. The folding pedal as claimed in claim 9, wherein said actuating frame has a top protruding rib and a bottom protruding rib corresponding to top and bottom sides of the associating stop bar of said pedal body.

11. The folding pedal as claimed in claim 9, wherein the side lugs of said two pedal blocks each have a forwardly extending butt for stopping against said stop bars of said pedal body to limit the turning angle of said pedal blocks relative to said pedal body.

12. The folding pedal as claimed in claim 4, wherein the side lugs of said two pedal blocks each have a round hole respectively pivotally connected to the axle holes of said pedal body by said pivot bolts; said first synchronous gear and said second synchronous gear are respectively affixed the round hole of one side lug of each of said two pedals.

13. The folding pedal as claimed in claim 12, wherein said first synchronous gear and said second synchronous gear each have an axial center through hole for the passing of said pivot bolts respectively.

14. The folding pedal as claimed in claim 12, wherein the side lugs of said pedal blocks each have at least one locating notch in communication with the round hole of the respective side lug; said first synchronous gear and said second synchronous gear each have at least one locating rib respectively engaged with the at least one locating notch in the round hole of the associating side lug.

15. The folding pedal as claimed in claim 12, further comprising a bearing bushing sleeved onto one of said pivot bolts at one side of said pedal body opposite to said actuating frame and coupled between one side lug of each of said two pedals.

16. The folding pedal as claimed in claim 15, wherein said bearing bushing has two distal ends respectively coupled to the round hole at one side lug of each of said two pedals.

17. A folding pedal folding method comprising the steps of:
a) providing a pedal body with a center spindle and coupling said center spindle to a crank of a bicycle;
b) pivotally coupling two pedal blocks to top and bottom sides of said pedal body for allowing turning of said pedal blocks about an axis perpendicular to the extending direction of said center spindle; and
c) turning said two pedal blocks relative each other between a close position and an open position.
